# EUROPÄISCHE PATENTSCHRIFT

(11) **EP 1 123 755 B1**
(45) Veröffentlichungstag und Bekanntmachung des Hinweises auf die Patenterteilung: **11.05.2005**
(21) Anmeldenummer: 00102787.9
(22) Anmeldetag: 10.02.2000
(51) Int. Cl.: B09C 1/08

(54) **Verfahren zur Entfernung anorganischer Verbindungen aus einem Erdbodenbereich**
Method for removing inorganic compounds from soil
Procédé pour éliminer des composés minéraux du sol

(43) Veröffentlichungstag der Anmeldung: 16.08.2001
(73) Patentinhaber: Döring, Falk, Dr., 70469 Stuttgart (DE); Döring, Niels, 70469 Stuttgart (DE)
(72) Erfinder: Döring, Falk, Dr., 70469 Stuttgart (DE); Döring, Niels, 70469 Stuttgart (DE)
(74) Vertreter: von Puttkamer, Nikolaus, Dipl.-Ing.

(56) Entgegenhaltungen:
- EP-A- 0 312 174
- EP-A- 0 504 551
- DE-A- 4 301 270
- DE-C- 3 920 342
- US-A- 5 738 778

## Beschreibung

Die vorliegende Erfindung betrifft ein Verfahren zur Entfernung anorganischer Verbindungen aus dem Erdbodenbereich nach dem Oberbegriff des Patentanspruches 1.

Insbesondere betrifft die Erfindung die elektrochemische, in-situ erfolgende Umwandlung anorganischer Schadstoffe im Boden zu Zwecken ihrer elektrokinetischen Mobilisierung im Boden und ihrer Abscheidung auf beiden Elektroden einer in den Boden eingebrachten Elektrodenanordnung. Da im erfindungsgemäßen Verfahren die elektrochemische Bildung von Komplex-Ionen die wichtigste Verfahrenskomponente darstellt, wurde dem Verfahren die Bezeichnung "Induzierte Komplexierung" gegeben.

Der Stand der Technik bei der Entfernung von anorganischen Schadstoffen aus Böden wird durch elektrokinetische Verfahren beschrieben, wie sie aus den Patenten US 5,074,986 (24.12.1991; MIT; Probstein et al.),US 5,137,608 (11.08. 1992; LSU; Acar, Gale et al.),Europäische Patentanmeldung EP 0312 174 (13.10.1998; Pool, Lageman et al.) und DE-C-3 920 342 (Döring) hervorgehen. Die DE-C-3920342 bilded dem Oberbegriff des Anspruchs 1. Das Grundprinzip der elektrokinetischen Bodensanierung basiert demnach auf der Erzeugung eines elektrischen Feldes im Untergrund, durch das eine gezielte Bewegung von Schadstoffen angeregt wird. Durch die Einwirkung des elektrischen Stromes auf die Schadstoffe werden jedoch die Schadstoffe chemisch nicht verändert. Eine Sanierungsanlage besteht dabei im wesentlichen aus in einem zu sanierenden Bodenbereich angeordneten Elektroden (Kathode - Anode) und entsprechenden Reservoirs, die beispielsweise durch semipermeable Elektrodenkammern gebildet werden. An die Elektroden wird von einer Gleichstromquelle ein Gleichstrom angelegt. Durch das angelegte Feld entstehen elektrokinetische Prozesse im Bodenbereich, die den Transport des Porenwassers des Bodens und der darin gelösten mobilen (ionaren, Kolloiden) Schadstoffe bewirken. Positiv geladene Ionen, Molekülreste und Kolloide wandern zur Kathode und negativ geladene Teilchen wandern zur Anode. Das Porenwasser fungiert dabei als elektrisch leitendes Medium, durch das die geladenen Teilchen unter dem Einfluß der elektrischen Feldkräfte zur entgegengesetzt geladenen Elektrode transportiert werden.

Die Elektrokinetik gliedert sich gründsätzlich in drei verschiedene Mechanismen, nämlich den Ionentransport, die Elektroosmose und die Elektrophorese.

Beim Ionentransport bewegen sich Ionen und ionare Komplexe in der Porenflüssigkeit.

Bei der Elektroosmose bewegen sich das Porenwasser und die darin gelösten Schadstoffe über diffusive Ionenschichten an der Kapillarengrenzfläche zwischen Porenlösung und Mineral. Dieser Prozess kommt allerdings nur dann zustande, wenn der Boden Durchlässigkeiten einer semipermeablen Membran aufweist, wie z.B. bei Tonen und stark feinkörnigen Böden.

Die Elektrophorese entspricht der Bewegung von geladenen suspendierten Kolloiden und Bodenteilchen im elektrischen Feld.

Im folgenden werden die zuvor genannten Mechanismen als "Elektrokinese" bezeichnet. Die Elektrokinese ist lediglich ein Transportmechanismus; die Entfernung der Bodenschadstoffe ist ein von der Elektrokinese unabhängiger Verfahrensteil. Die Entfernung der Schadstoffe erfolgt in der Regel durch Abpumpen des in den semipermeablen Elektrodenkammern zusammenströmenden, mit Schadstoffen beladenen Grundwassers, das dann in aufwendigen Abwasserbehandlungsanlagen aufbereitet werden muß.

Die dem Stand der Technik entsprechenden elektrokinetischen Verfahren weisen eine Reihe von Mängeln auf. So wird der elektrische Wirkungsgrad der Elektrodensysteme deutlich durch den Aufbau der semipermeablen Elektrodenkammern durch Geotextilien, Membrane und/oder Doppelwandsysteme beeinträchtigt. In Einzelfällen war es aufgrund der hohen tatsächlichen elektrischen Widerstände zwischen den Elektroden nicht mehr möglich, eine ausreichende Stromstärke zu vertretbaren Spannungen zu treiben. Ein weiterer Mangel der elektrokinetischen Verfahren besteht darin, daß unspezifisch alle Ionen und Kolloide im Grundwasser zu den Elektroden transportiert werden und on-site in aufwendigen Wasserreinigungsanlagen aus dem aus den Elektrodenreservoirs abgepumpten Wasser eliminiert werden müssen, obwohl z.B. Härtebildner keine Schadstoffe sind und somit nicht aus dem Wasser zu entfernen sind. Eine Reihe von anorganischen Schadstoffen wie z.B. Quecksilbersulfid, Bleimennige oder Arsentrioxid entziehen sich völlig der elektrokinetischen Mobilisierung und bleiben somit als latent gefährliche Schadstoffe im Boden.

Aus der Druckschrift DE-A-43 01 270.1 ist ein Verfahren bekannt beidem organische und anorganische Schadstoffe in-situ aus dem Boden entfernt werden. Dieses Verfahren wird in der Weise durchgeführt, daß in einem Schritt zur Erhöhung der Leitfähigkeit des Bodens zwischen den Elektroden durch Anlegen einer Spannung ein Ionisierungskanal erzeugt, und in einem zweiten Schritt eine Arbeitsspannung durch Einstellen der Stromstärke derart eingeregelt wird, daß die eingesetzte Energie gleich oder größer ist als die Elektronenaffinität der Schadstoffmoleküle bzw. der Radikale. Dabei erfolgt eine Oxidation der Schadstoffe durch Elektronenreaktionen. Aus der Patentanmeldung EP-A-0729 796 ist ein Verfahren bekannt, wonach organische und anorganische Schadstoffe durch Redox-Reaktionen an den polarisierten Bodenpartikeln in CO2 und Wasser zerlegt werden. Dieses in den beiden Druckschriften beschiebene Verfahren wird im folgenden als "Geooxidation" bezeichnet.

Die Aufgabe der vorliegenden Erfindung besteht darin, ein Verfahren zu schaffen, gemäß dem erstens die in-situ erfolgende, elektrochemische Umwandlung anorganischer Schadstoffe mit einer höheren Reinigungsleistung als sie elektrokinetische Prozesse besitzen erfolgen kann, zweitens wasserunlösliche anorganische Substanzen zu Ionen umgewandelt werden können, drittens die Ionen, die aus dem Boden auszutragen sind, selektiert werden können sowie viertens das Austragen der Schadstoffe in einer relativ einfachen Weise erfolgen kann.

Diese Aufgabe wird durch ein Verfahren mit den Merkmalen des Patentanspruches 1 gelöst.

Der wesentliche Vorteil der vorliegenden Erfindung besteht darin, daß anorganische Verbindungen in-situ durch spezielles Einregeln der zwischen zwei im Boden angeordneten Elektroden angelegten Spannung so umgewandelt werden können, daß sie elektrokinetisch mobilisiert und auf den Elektrodenoberflächen unmittelbar abgeschieden werden können und dort einen galvanischen Überzug bilden, der mit den Elektroden am Ende der Bodensanierung aus dem Boden entfernt wird. Daher kann eine aufwendige Wasserförderung und Wasserreinigung des von den Elektroden abgepumpten Wassers entfallen.

Zur Durchführung der oben genannten Aufgabe sind andere Reaktionswege erforderlich, als bei der Geooxidation.

Im folgenden werden die Erfindung und deren Ausgestaltungen im Zusammenhang mit den Figuren näher erläutert. Es zeigen:
- Figur 1: in schematischer Darstellung eine in einem Bodenbereich angeordnete Elektrodenanordnung zur Schadstoffsanierung gemäß der vorliegenden Erfindung;
- Figur 2 A, B: Darstellungen zur Erläuterung des Kolloidmodells;
- Figur 3: ein Oszillogramm zur Erläuterung der Entstehung von Stoßspannungen durch die Restwelligkeit eines an die Elektroden angelegten Gleichstromes; und
- Figur 4: ein Diagramm zur Erläuterung des ersten Schrittes des erfindungsgemäßen Verfahrens, bei dem gezielt ein Übergangsbereich zwischen der Geooxidation und der Elektrokinese aufgesucht wird.

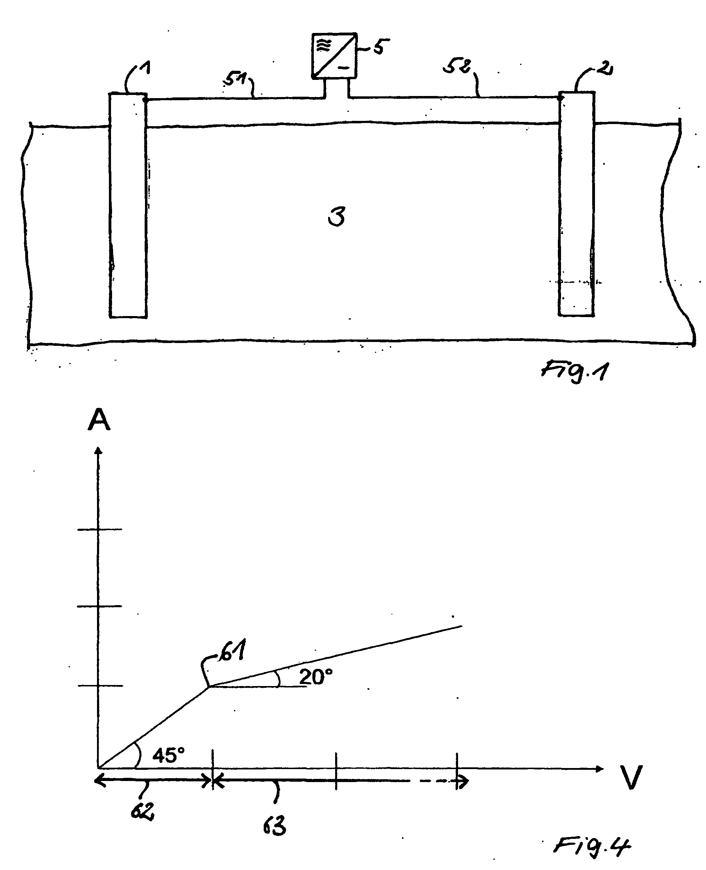

Gemäß Figur 1 werden in einen Erdbodenbereich 3, aus dem Schadstoffe in der Form von organischen Verbindungen ausgetragen werden sollen, voneinander entfernt gelegene Elektroden 1 und 2 eingebracht, an die von einer Gleichstromquelle 5 über die Leitungen 51, 52 eine Gleichspannung angelegt wird. Die Elektroden 1 und 2 dienen als Ort der Abscheidung selektierter Ionen, Komplexionen und Kolloide, insbesondere aber Halbmetalle, Metalle und Schwermetalle. Die aufwendige Wasserförderung und Wasserreinigung on-site können vollständig entfallen. Die Elektroden 1, 2 werden horizontal oder vertikal in Abhängigkeit von der Arbeitstiefe im Boden installiert. Die Elektroden 1, 2 sollten vorzugsweise eine Oberfläche haben, die gleich oder größer ist als die Oberfläche eines 5" oder 6"-Rohres bzw. die entsprechende Oberfläche als Plattenelektrode.

Im Rahmen der Forschungen zum Verfahren gewonnener neuer Erkenntnisse ist es erforderlich, den Stand der Technik bezüglich der elektrochemischen Eigenschaften des Bodens neu zu definieren. Die Betrachtung setzt notwendigerweise am Haftwasser (nicht entwässerbarer Wasseranteil der Bodenmatrix an). Die im folgenden verwendete Bezeichnung "Bodenpartikel" schließt auch Schadstoffpartikel ein.

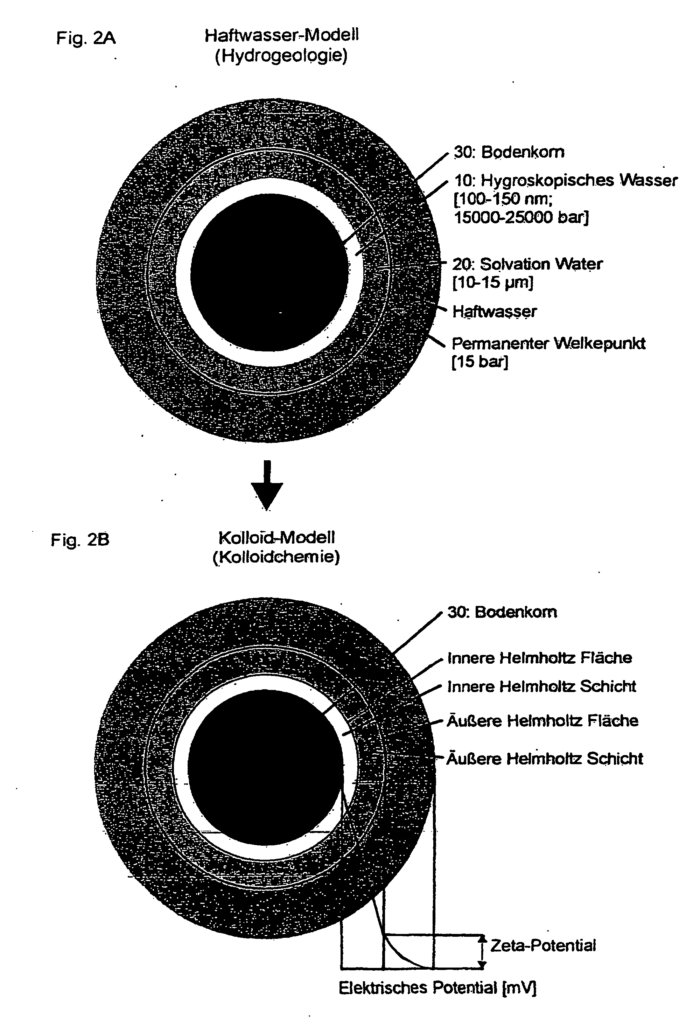

Es ist Stand der Wissenschaft, daß im Bodenbereich 3 Haftwasser durch unterschiedliche Kräfte in unterschiedlichen Intensitäten am Bodenpartikel, zu der auch die im Bodenbereich 3 enthaltenen Schadstoffpartikel 30 (Figur 2A) zu rechnen sind, gehalten wird. Um die Bodenpartikel 30 herum bilden sich jeweils zwei Wasserhüllen, nämlich eine innere Hydrathülle 10 aus Adsorptionswasser (hygroskopisches Wasser), das durch elektrostatische Kräfte, wie Coulomb'sche Kräfte, Van-der-Waalsche-Kräfte oder London'sche Kräfte an der Oberfläche eines Bodenpartikels mit Überdrücken von 10.000 bis 25.000 bar gehalten wird, sowie eine zweite äußere Hydrathülle 20 aus Hydratationswasser (Solvatationswasser). Die innere Hydrathülle 10 weist eine Stärke im Bereich von Picometern bis Nanometern auf, wohingegen die zweite Hydrathülle 20 eine Schichtstärke von einigen Nanometern bis zu einigen Mikrometern besitzt. Das Grundlegende der Erfindung besteht in der Erkenntnis, daß die Haftwasserschalenstruktur gemäß Figur 2A dem Nernst-/Sternschen Kolloidmodell (Figur 2B) in nahezu allen wesentlichen Details entspricht. Damit kann aber die Elektrochemie der Kolloide weitgehend auf die Elektrochemie der Böden bezogen werden. Es kann somit die Terminologie der Hydrogeologie mit der Terminologie der Kolloidchemie weitgehend kompatibel gemacht werden. Das Adsorptionswasser (innere Hydrathülle 10) entspricht in etwa der inneren Helmholtz-Schicht, das Hydratationswasser (äußere Hydrathülle 20) der äußeren Helmholzschicht, auch diffuse Schicht genannt. Zwischen dem Kern des Kolloids und der inneren Helmholtzschicht und der inneren und äußeren Helmholtzschicht befinden sich jeweils elektrochemisch aktive Grenzflächen, an denen elektrochemische Reaktionen und der Transport von Elektronen im Boden stattfinden. Das Potential zwischen der den Kern umgebenden Grenzfläche und der äußeren Begrenzung der diffusen Schicht wird Nernst-Potential, das Potentialgefälle innerhalb der diffusen Schicht Zeta-Potential genannt.

Diese Erkenntnis eröffnet nunmehr neue Möglichkeiten, anorganische Schadstoffe elektrochemisch umzuwandeln, wobei die für diese Reaktionen erforderliche Energie von der kolloiden Struktur des Bodens bereitgestellt wird, nämlich aus den Eigenschaften des Kolloids als Kondensator. Dieser Kondensator weist die folgenden Eigenschaften auf: die Dielektrizitätskonstante ε zwischen den Hydrathüllen 10, 20 beträgt temperaturabhängig zwischen 87,74 (0°C) und 81,95 (15°C). Die Dicke des Dielektrikums liegt im Bereich von wenigen Nanometern. Die natürliche Kapazität des Bodens (ohne künstliche Beaufschlagung mit Strom durch Sanierungsmaßnahmen) beträgt zwischen C = 4,5µF und 15 µF beträgt.

Hinsichtlich des Kondensatoreffektes der Bodenpartikel sind zwei Zustände zu unterscheiden.
(a) Anlegen eines Gleichstromes, der den Kondensator auflädt. Bei einem ständigen Nachladen von Elektronen fließen die Elektronen aus dem Kondensator, zum Teil in Stoßentladungen ab. Die Stärke der Stoßentladungen wird dabei durch das Anlegen einer speziellen, mit einer Restwelligkeit behafteten Gleichspannung wesentlich verbessert.

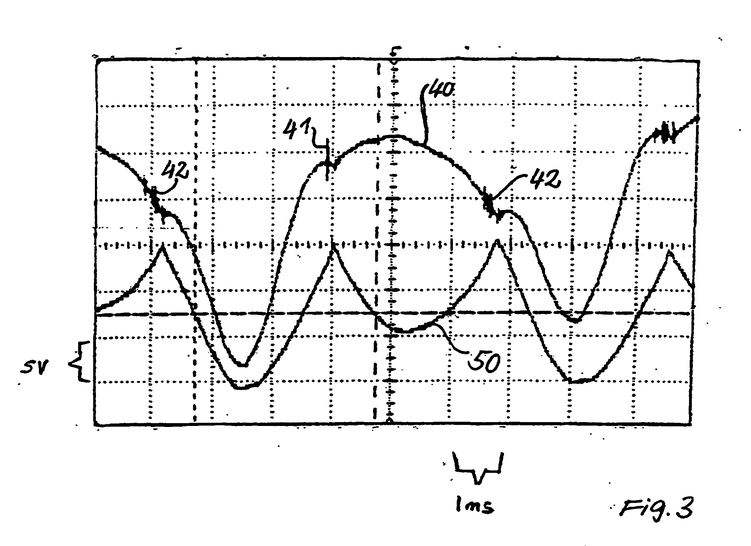

In Fig. 3 ist ein Oszillogramm enthalten, das auf einer Baustelle in SW-Texas aufgenommen wurde und dementsprechend eine Frequenz der Restwelligkeit von nominal 360 Hz, tatsächlich 329,5 Hz, aufweist. Die Spannung im Oszillogramm ist auf die Restwelligkeit bezogen und wird zwischen zwei Elektroden gemessen, während die Stromstärke an den Ausgangsklemmen der Gleichrichter (Ausgangsstromstärke) gemessen wird. Wird an die Elektroden 1, 2 im Bodenbereich 3 ein Gleichstrom angelegt, der mit einer Wechselstromkomponente, vorzugsweise einer Restwelligkeit der Gleichrichtung eines Wechselstromes behaftet ist und ist die Spannung so niedrig dimensioniert, daß sie das Dielektrikum nicht sofort durchschlägt, sondern den genannten "Kondensator" laden kann, dann sind Stoßentladungen zu erwarten. In Feldmessungen in schluffigen Böden in Südwest-Texas konnte der erste Nachweis der Stoßentladungen, der gleichzeitig der Bestätigung der Kolloidtheorie dient, geführt werden. Wiederholungen der Messungen in Deutschland und Dänemark bestätigten dieses Phänomen. In der Figur 3 stellt die obere Kurve 40 eine mit einer Restwelligkeit überlagerte gleichgerichtete Gleichspannung dar. An den Flanken der Spannungskurve 40 treten jeweils Stoßentladungen an den Punkten 41 und 42, beispielsweise in der Größenordnung von 2 bis 5 Volt, z.T. aber auch um 2 bis 4 Zehnerpotenzen höher, auf. Die untere Stromkurve 50 zeigt, daß in der Folge der Stoßentladungen an den Klemmen des Wechselstrom/Gleichstrom-Wandlers 5 weniger Elektronen abgezogen werden, während der Spanunngsanstieg anzeigt, daß verstärkt Elektronen fließen. Damit muß der Boden den Strom liefern. Die damit verbundenen Stoßentladungen erzeugen ein unmittelbar auf die Bodenpartikel und Schadstoffe 30 einwirkendes Spannungsniveau, das auf die Dimension der Schadstoff- und Bodenpartikel bezogen, extrem hoch ist und daher Dissoziations-, Aktivierungs- und Reaktionsenergien bereitstellt, die für die Umsetzungsreaktionen von Schadstoffen 30 benötigt werden. Die Bereitstellung dieser Energien durch die beschriebene Stoßentladung stellt die entscheidende Voraussetzung für die Umsetzungsreaktionen bei der Geooxidation, aber auch bei den hier ablaufenden Reaktionen zur elektrochemischen Umwandlung von anorganischen Schadstoffen dar.

Beispielsweise sind bei einer 6-Puls-Gleichrichtung und einem Drehstrom von 400 V und 50 Hz pro Elektrodenpaar 1, 2 je nach den Netzverhältnissen, 600 Stoßentladungen pro Sekunde zu erwarten. In der Figur 3 entspricht auf der Y-Achse für die Kurve 40 ein Teilstrich 5 V. An den Flanken der Kurve 40 sind jeweils Stoßentladungen (Punkte 41, 42) in der Größenordnung von 2 bis 5 V erkennbar. Es wird darauf hingewiesen, daß z.B. die Dissoziationsenergie, die aufgewendet werden muß, um z.B. ein Molekül zu spalten oder ein Atom abzuspalten, in der Größenordnung von 45 Kcal x Mol⁻¹ und etwa 120 Kcal x Mol⁻¹ liegt, wobei eine kcal 1,62464 Wh entspricht.

Die Kolloidtheorie wird durch eine zweite Beobachtung gestützt. Aus Figur 4 geht ein Spannungsverlauf hervor, der die auf der y-Achse aufgetragene Stromstärke treiben soll. Der Boden ist ein Ohmscher Verbraucher. Bei Messungen auf einer Baustelle in SW-Texas wurde beobachtet, daß Spannung und Stromstärke (Bereich 62) in linear Abhängigkeit voneinander zunächst von 15V/15A auf 38V/38A anstiegen, d.h. der Widerstand zwischen den beiden Elektroden 1,2 L Ω betrug, daß danach (Bereich 63) aber bei 38,5 V (Knickpunkt 61) für jedes zusätzliche Ampere mehr nicht mehr ein V, sondern nunmehr 3,2 V benötigt wurden, d.h., daß der Widerstand auf 3,125 Ω anstieg. Auf dem Oszilloskop verschwanden bei dem Knickpunkt 61 die Stoßentladungsspitzen. Die Analyse dieses Phänomens führte zur Fortschreibung des Standes der Technik. Wir haben den Knickpunkt 61 der Anstiegskurve (resp. des Ausbreitungswiderstandes zwischen zwei Elektroden 1, 2) als "Elektrokinetischen Punkt" bezeichnet. Unterhalb dieses Elektrokinetischen Punkts (Bereich 62) herrscht die kolloide Leitfähigkeit des Bodens mit der zusätzlichen Energiezufuhr in Form von Stoßentladungen des Bodenpartikels in seiner Eigenschaft als Kondensator vor. Oberhalb des Elektrokinetischen Punktes (Bereich 63) überwiegt die ionische Leitfähigkeit bei der Ermittlung des Anstiegs des elektrischen Widerstandes zwischen zwei Elektroden 1, 2, wenn die Elektronen das Dieelektrikum durchschlagen und nunmehr die elektrokinetischen Prozesse auslösen.

Das Wesen der vorliegenden Erfindung besteht nun darin, an die in einem Bodenbereich 3 eingebrachten Elektroden 1,2 eine Spannung anzulegen und so zu regeln, daß entweder elektrochemische Umsetzungsreaktionen an jedem einzelnen Bodenpartikel oder aber elektrokinetische Transportprozesse, die in die elektrochemische (galvanische) Abscheidung der selektierten Ionen, Komplexionen und Kolloide auf beiden Elektroden übergehen, auftreten.

Zu den elektrochemischen Reaktionen unterhalb des Elektrokinetischen Punktes 61 gehören:
(1) die Änderung der Oxidationszahl von insbesondere Metallen und Halbmetallen, so z.B. von sechswertigem Cr in zwei- oder dreiwertiges Chrom oder von Hg° zu Hg⁺
(2) die Aufspaltung wasserunlöslicher anorganischer Verbindungen in ihre elementaren Grundsubstanzen. So wird z.B. HgS in metallisches Quecksilber und kolloides Schwefel zerlegt. Gleiches gilt z.B. für Bleimennige (Pb₃O₄) oder Arsentrioxid (As₂O₃)
(3) die Umwandlung von unpolaren Substanzen wie metallischem Quecksilber (Hg°) in Kolloide
(4) die Bildung von Komplex-Ionen (induzierte Komplexierung) zum großen Teil mit zwei und mehr Zentralatomen, die auch mit unterschiedlichen Metallatomen besetzt sein können. Hierzu gehören in einer chlorierten Umgebung (Brack-, Seewasser) die Bildung von Chloro-Komplex-Ionen, meist in der Form eines HgCl₃⁻ Doppelbandes oder eines HgCl₄²⁻Bandes, die an den Anoden abgeschieden werden. Ferner konnten bei anderen Böden Hydroxo-Komplex-Ionen und/oder Ammin-Salze festgestellt werden
(5) Bildung von Koordinationsverbindungen mittels Sauerstoff-Atomen, CN-Radikalen, Wasseremolekülen und NH₃-Gruppen
(6) Die Umwandlung von bestimmten Metallen und Halbmetallen (wie Sn, As, Sb, Se und Te) zu Hydriden, die gasförmig sind und über den Gaspfad aus dem Boden extrahiert werden.

Die vorgenannten Kolloide und Komplex-Ionen können im Grenzbereich des Elektrokinetischen Punktes 61 in der Regel bei Metallen anodisch galvanisch abgeschieden werden. Die Selektion der abzuscheidenden Metalle und Halbmetalle erfolgt durch die Wahl der Elektrodenwerkstoffe, die von Fall zu Fall in Abhängigkeit von der Sanierungsaufgabe ausgewählt werden. So werden für Schwermetalle als Kathodenwerkstoff Eisen (Stahl, insbesondere nicht oder niederlegierter Baustahl) und Alumimium ausgewählt. Die Anodenwerkstoffe sollten gegen Prozesse der anodischen Oxidation beständig sein. Hierzu gehören Graphit- und Carbon-Werkstoffe, Titan und Titan-bedampfte, beschichtete oder anderweitig mit Titan vergütete Werkstoffe und Stähle.

Die oben genannten Erkenntnisse wurden in mehreren Feldprojekten untersucht und erprobt. In einem brackwasserführenden Kanal in England wurde eine hohe Kontamination mit Quecksilber aus der Herstellung von Knallquecksilber angetroffen. Aufgrund des hohen Anteils mit organischen Quecksilberverbindungen wurde entschieden, zunächst in einer Vorphase die organischen Quecksilberverbindungen mit Stromparametern unterhalb des Elektrokinetischen Punktes 61, der bei 142,5 Vd.c. und 16 A lag, aufzuspalten. Eingesetzt wurden horizontal im Kanal verlegte Rohre mit einem Nenn-Durchmesser von 180 mm, 16 m lang. Der Ausbreitungswiderstand betrug in der Vorphase 8,9 Ω. Nach drei Tagen wurde die Stromstärke auf 20 A erhöht und der elektrokinetische Transport der Ionen, Komplexionen und Kolloide eingeleitet. Die Spannung stellte sich nunmehr auf 248 V d.c. ein, der Widerstand erhöhte sich auf 12,4 Ω. Die Belastung der Kanalsedimente mit Quecksilber sank in 26 Tagen Behandlung z.B. am höchstbelasteten Meßpunkt von 809 mg/kg TM auf 4 mg/kg TM. In allen behandelten Bereichen sank die hohe Quecksilberbelastung unter den Sanierungszielwert von 15 mg/kg TM. Die Masse organischer Quecksilberverbindungen sank von 10,2 mg/kg TM auf Werte unterhalb der Bestimmungsgrenze. Die nach der Behandlung gewogenen Elektroden wiesen einen silbrig glänzenden (an der Kathode) bzw. silbrig stumpfen Belag (an der Anode) auf, der nicht abgewischt werden konnte. Insgesamt wurde eine Massezunahme an den Elektroden von 76 kg festgestellt; davon entfielen etwa 52 Gewichts-% auf die Anode. Durch Röntgen-Strukturanalysen konnte festgestellt werden, daß Quecksilber-Chlorokomplex-Ionen gebildet worden waren, die auch andere Metalle und Halbmetalle enthielten, wie z.B. Cadmium, Arsen, Zinn und Vanadium.

In einer hoch mit Schwermetallen wie Blei, Kupfer und Zink sowie Arsen hochbelasteten Abwasserschlamm-Lagune eines Walzwerkes wurde ein Sanierungs-Versuch im Maßstab 1:1 zur Vorbereitung einer nachfolgenden Sanierung mit Stromparametern unterhalb des elektrokinetischen Punktes 61 durchgeführt. Die inzwischen vollständig ausgetrockneten Schlämme waren extrem hydrophob. Parallel zur Entwicklung einer Technologie, mit der die Hydrophobie der Trockenschlämme überwunden werden konnte, sanken die Ausbreitungswiderstände zwischen den beiden je 2 m² großen Plattenelektroden von 50,8Ω auf 19,6Ω. Die Spannung betrug 214 V d.c. bei 10,9 A. In 30 Tagen Test nahmen im Anodenbereich die Konzentration alle Schwermetalle ab, so z.B. bei Blei von 460 mg/kg auf 260 mg/kg, bei Zink von 840 mg/kg auf 650 mg/kg, bei Arsen von 64 mg/kg auf 52mg/kg und bei Chrom von 9,8 mg/kg auf 5,9 mg/kg. An der Kathode wurde für fast alle Schwermetalle ein gleichartiger Prozess beobachtet: Chrom nahm von 49 mg/kg auf 8,9 mg/kg ab, Zink von 1.900 mg/kg auf 1.440 mg/kg; bei Blei, Cadmium und Nickel wurden lediglich marginale Konzentrationserhöhungen im Bereich von bis zu 10 Gewichts-% festgestellt, obwohl nach der traditionellen Lehre eine wesentliche Anreicherung der Schwermetalle an der Kathode zu erwarten war. An den Elektroden wurde eine Zunahme der Masse um 8,5 kg festgestellt, davon 62 % an der Kathode und 38% an der Anode. Die abgeschiedene Masse entspricht bei einem Wirkungsgrad der galvanischen Abscheidung von 92,2% der vor Beginn des Versuchs errechneten Abscheidungsquote.

## Patentansprüche

1. Verfahren zur Entfernung anorganischer Verbindungen aus einem Bodenbereich, bei dem in-situ eine zwischen zwei oder mehrere in dem Bodenbereich (3) installierte Elektroden (1, 2) angelegte elektrische Spannung zum Zwecke der elektrokinetischen Mobilisierung von organischen Verbindungen eingeregelt wird, **dadurch gekennzeichnet, dass** die Spannung auf Werte am oder unterhalb des elektrokinetischen Punktes (61) eingeregelt wird, sodass die anorganischen Verbindungen elektrochemisch so verändert werden, daß sie elektrokinetisch mobilisiert und auf den Elektroden (1, 2) unmittelbar abgeschieden werden können, wobei der elektrokinetische Punkt (61) durch Anlegen und Steuern einer Spannung an die Elektroden (1, 2) eingestellt und erreicht wird, wenn nach Durchlaufen eines ersten Strom/Spannungs-Bereiches (62) einer ersten Steigung ein zweiter Strom/Spannungsbereich (63) einer zweiten Steigung, die kleiner als die erste Steigung ist, erreicht wird.

2. Verfahren nach Anspruch 1, **dadurch gekennzeichnet, daß** in-situ wasserunlösliche Verbindungen elektrochemisch in ihre elementaren Grundsubstanzen zerlegt werden.

3. Verfahren nach Anspruch 1, **dadurch gekennzeichnet, daß** in-situ unpolare anorganische Substanzen in Kolloide umgewandelt werden.

4. Verfahren nach Anspruch 1, **dadurch gekennzeichnet, daß** in-situ die Komplexierung von Atomen und Molekülen, z.T. mit zwei und mehr zentralen Atomen, induziert wird, zu insbesondere Hydroxo- und/oder Chloro-Komplexionen und/oder Ammin-Salzen.

5. Verfahren nach Anspruch 1, **dadurch gekennzeichnet, daß** in-situ elektrochemisch Koordinationsverbindungen mittels Sauerstoffatomen, CN-Radikalen, Wassermolekülen und NH₃-Gruppen erzeugt werden.

6. Verfahren nach Anspruch 1, **dadurch gekennzeichnet, daß** in-situ Metalle/Halbmetalle unter Einschluß ihrer Isotopen aus der vierten (Sn), fünften (As, Sb) und sechsten (Se, Te) Hauptgruppe des Periodensystems der Elemente elektrochemisch zu flüchtigen Hydriden umgewandelt werden.

7. Verfahren nach Anspruch 1, **dadurch gekennzeichnet, daß** die Ionen, Komplex-Ionen und Kolloide durch Wahl der Elektrodenwerkstoffe selektiv auf den Elektroden abgeschieden werden.

8. Verfahren nach einem der Anspruche 1 bis 7, **dadurch gekennzeichnet, daß** die Werkstoffe für die Kathoden Eisen, Stahl und Aluminium und für die Anoden Graphit, Karbonwerkstoffe und Titan, Titan-bedampfte, -beschichtete oder anderweitig mit Titan vergütete Werkstoffe und Stähle sind.

9. Verfahren nach einem der Ansprüche 1 bis 8, **dadurch gekennzeichnet, daß** die Betriebsspannung ein Gleichstrom, ein Gleichstrom mit einer Restwelligkeit, ein pulsierender Gleichstrom, ein Wechselstrom oder ein frequenzmodulierter Wechselstrom ist.

10. Verfahren nach einem der Ansprüche 1 bis 9, **dadurch gekennzeichnet, daß** die Elektroden (1, 2) horizontal und/oder vertikal im Bodenbereich (3) installiert werden.

11. Verfahren nach einem der Ansprüche 1 bis 10, **dadurch gekennzeichnet, daß** die Elektrodenoberfläche wenigstens der Oberfläche eines 5"- oder 6"-Rohres entspricht.

12. Verfahren nach Anspruch 11, **dadurch gekennzeichnet, daß** die Elektroden rohrförmig oder plattenförmg ausgebildet sind.

## Claims

1. Method for removing inorganic compounds from soil, in which an electrical voltage applied between two or more electrodes (1, 2) installed in the soil (3) for the purpose of the electrokinetic mobilization of organic compounds is regulated in situ, **characterized in that** the voltage is regulated to values at or below the electrokinetic point (61), so that the inorganic compounds are changed electrochemically in such a way that they are mobilized electrokinetically and can be deposited directly on the electrodes (1, 2), in conjunction with which the electrokinetic point (61) is set and achieved by the application and control of a voltage at the electrodes (1, 2), when, after passing through a first current/voltage range (62) of a first gradient, a second current/voltage range (62) of a second gradient is achieved that is smaller than the first gradient.

2. Method in accordance with Claim 1, **characterized in that** in situ water-insoluble compounds are separated electrochemically into their constituent elements.

3. Method in accordance with Claim 1, **characterized in that** in situ nonpolar inorganic substances are transformed into colloids.

4. Method in accordance with Claim 1, **characterized in that** in situ the complexing of atoms and molecules, some with two and more central atoms, is induced to form in particular hydroxy and/or chloro complex ions and/or ammine salts.

5. Method in accordance with Claim 1, **characterized in that** in situ coordination compounds are produced electrochemically by means of oxygen atoms, CN radicals, water molecules and NH₃ groups.

6. Method in accordance with Claim 1, **characterized in that** in situ metals/metalloids, with the inclusion of their isotopes, are transformed electrochemically into volatile hydrides from the fourth (Sn), fifth (As, Sb) and sixth (Se, Te) main groups of the periodic system of the elements.

7. Method in accordance with Claim 1, **characterized in that** the ions, complex ions and colloids are deposited selectively on the electrodes by the appropriate choice of the electrode materials.

8. Method in accordance with one of Claims 1 to 7, **characterized in that** the materials used for the cathodes are iron, steel and aluminium, and for the anodes graphite, carbon materials and titanium, materials vapour deposited with titanium, coated with titanium or otherwise enhanced with titanium, and steels.

9. Method in accordance with one of Claims 1 to 8, **characterized in that** the operating voltage is a direct current, a direct current with a residual ripple, a pulsating direct current, an alternating current or a frequency-modulated alternating current.

10. Method in accordance with one of Claims 1 to 9, **characterized in that** the electrodes (1, 2) are installed horizontally and/or vertically in the soil (3).

11. Method in accordance with one of Claims 1 to 10, **characterized in that** the electrode surface is at least equivalent to the surface of a 5" or a 6" tube.

12. Method in accordance with Claim 11, **characterized in that** the electrodes are executed in the form of tubes or sheets.

## Revendications

1. Procédé permettant d'éliminer d'un sol des composés inorganiques, dans lequel on règle in situ une tension électrique appliquée entre deux électrodes (1, 2) ou plus, installées dans le sol (3), en vue de mobiliser par voie électrocinétique les composés organiques, **caractérisé en ce qu'**on règle la tension à une valeur inférieure ou égale à celle du point de transition électrocinétique (61), de manière à ce que les composés inorganiques soient électrochimiquement modifiés de telle sorte qu'ils puissent être mobilisés par voie électrocinétique et se déposer directement sur les électrodes (1, 2), le point de transition électrocinétique (61) étant atteint et ajusté par application et régulation de la tension entre les électrodes (1, 2) quand, après avoir parcouru un premier domaine courant/tension (62) où la pente a une première valeur, on atteint un deuxième domaine courant/tension (63) où la pente prend une deuxième valeur, plus petite que la première.

2. Procédé conforme à la revendication 1, **caractérisé en ce que** des composés insolubles dans l'eau sont décomposés in situ par voie électrochimique en leurs composants élémentaires.

3. Procédé conforme à la revendication 1, **caractérisé en ce que** des substances inorganiques non polaires sont transformées in situ en colloïdes.

4. Procédé conforme à la revendication 1, **caractérisé en ce qu'**est induite la complexation in situ d'atomes et de molécules, en partie avec deux atomes centraux ou plus, qui donne en particulier des ions complexes, à ligands chloro et/ou hydroxo, et/ou des sels d'ammine.

5. Procédé conforme à la revendication 1, **caractérisé en ce que** des composés de coordination sont produits in situ, par voie électrochimique, au moyen d'atomes d'oxygène, de radicaux CN, de molécules d'eau et de groupes NH₃.

6. Procédé conforme à la revendication 1, **caractérisé en ce que** des métaux ou des semi-métaux (y compris leurs isotopes) des quatrième (Sn), cinquième (As, Sb) et sixième (Se, Te) groupes principaux du Tableau Périodique des Eléments sont convertis in situ par voie électrochimique en hydrures volatils.

7. Procédé conforme à la revendication 1, **caractérisé en ce que** des ions, des ions complexes et des colloïdes sont séparés sélectivement sur les électrodes, grâce au choix des matériaux des électrodes.

8. Procédé conforme à l'une des revendications 1 à 7, **caractérisé en ce que** les matériaux utilisables pour la cathode sont du fer, de l'acier et de l'aluminium, et **en ce que** les matériaux utilisables pour l'anode sont du graphite, des matériaux carbonés et du titane, des matériaux recouverts de titane, éventuellement déposé à partir d'une phase vapeur, ou autrement améliorés avec du titane, et des aciers.

9. Procédé conforme à l'une des revendications 1 à 8, **caractérisé en ce que** la tension de régime donne un courant continu, un courant continu à composante ondulatoire résiduelle, un courant continu pulsé, un courant alternatif, ou un courant alternatif à modulation de fréquence.

10. Procédé conforme à l'une des revendications 1 à 9, **caractérisé en ce que** les électrodes (1, 2) sont installées horizontalement et/ou verticalement dans le sol (3).

11. Procédé conforme à l'une des revendications 1 à 10, **caractérisé en ce que** la surface des électrodes correspond au moins à la surface d'un tube de 5 ou 6 pouces.

12. Procédé conforme à la revendication 11, **caractérisé en ce que** les électrodes sont construites en forme de tubes ou de plaques.
